(19) Europäisches Patentamt / European Patent Office / Office européen des brevets

(11) **EP 2 208 115 B1**

(12) **EUROPÄISCHE PATENTSCHRIFT**

(45) Veröffentlichungstag und Bekanntmachung des Hinweises auf die Patenterteilung:
**26.06.2019 Patentblatt 2019/26**

(51) Int Cl.:
*G03H 1/02* (2006.01)   *G03H 1/22* (2006.01)
*B42D 25/328* (2014.01)

(21) Anmeldenummer: **08845210.7**

(22) Anmeldetag: **31.10.2008**

(86) Internationale Anmeldenummer:
**PCT/EP2008/009349**

(87) Internationale Veröffentlichungsnummer:
**WO 2009/056359 (07.05.2009 Gazette 2009/19)**

(54) **SICHERHEITSDOKUMENT MIT BEUGENDER OBERFLÄCHENSTRUKTUR UND VERFAHREN ZU DESSEN HERSTELLUNG**

SECURITY DOCUMENT WITH A REFRACTIVE SURFACE STRUCTURE AND METHOD FOR THE PRODUCTION THEREOF

DOCUMENT DE SÉCURITÉ COMPRENANT UNE STRUCTURE SUPERFICIELLE DIFFRACTANTE ET SON PROCÉDÉ DE PRODUCTION

(84) Benannte Vertragsstaaten:
**AT BE BG CH CY CZ DK EE ES FI FR GB GR HR HU IE IS IT LI LT LU LV MC MT NL NO PL PT RO SE SI SK TR**

(30) Priorität: **31.10.2007 DE 102007052950**

(43) Veröffentlichungstag der Anmeldung:
**21.07.2010 Patentblatt 2010/29**

(73) Patentinhaber: **Bundesdruckerei GmbH**
**10969 Berlin (DE)**

(72) Erfinder:
• **LEOPOLD, André**
  **10119 Berlin (DE)**
• **PAESCHKE, Manfred**
  **16348 Wandlitz OT Basdorf (DE)**

(74) Vertreter: **Patentanwälte Bressel und Partner mbB**
**Potsdamer Platz 10**
**10785 Berlin (DE)**

(56) Entgegenhaltungen:
WO-A-01/53113          WO-A-2006/108607
WO-A1-2008/131852      JP-A- 10 143 057
JP-A- 2001 315 472     US-A1- 2007 013 983

EP 2 208 115 B1

## Beschreibung

Die Erfindung betrifft ein Sicherheitsdokument mit mindestens einem Sicherheitselement und ein Verfahren zu dessen Herstellung.

Als Sicherheitsdokumente werden jene Dokumente und Gegenstände bezeichnet, die durch mindestens ein Sicherheitselement gegen eine Verfälschung und/oder ein unautorisiertes Kopieren geschützt sind. Eine Art von Sicherheitselementen stellen beugende Strukturen, insbesondere Hologramme, dar.

In Sicherheitselemente sind oftmals auch individualisierende Angaben, beispielsweise Seriennummern, Ausweisnummern, biometrische Daten, Bilder (Passbilder) etc., enthalten. Diese können in Klarschrift bzw. Bildform oder optisch codiert bzw. maschinenlesbar vorgesehen sein.

Eine Art von beugenden Strukturen stellen so genannte beugende Oberflächenreliefs dar. Solche beugenden Oberflächenreliefs werden häufig auch als Prägehologramme bezeichnet, da eine aus dem Stand der Technik bekannte Herstellung ein Einprägen der reliefartigen Struktur in eine Oberfläche eines Dokumentkörpers oder einer Schicht vorsieht, die später in einen Dokumentkörper integriert wird. Die Prägung kann beispielsweise während einer Lamination mehrerer Schichten zu einem monolithischen Dokumentkörper erfolgen. Alternativ lassen sich Beugungsstrukturen durch gepulste Laser im Nanosekundenbereich in das Dokument einbringen. Ebenfalls ist es alternativ möglich, durch Laserapplikation oder Ähnliches ebenfalls beugende Strukturen in eine Oberfläche einzubringen. Dies gelingt besonders gut mit Femtosekundenlaserpulsen.

Allgemein stellen derart geschaffene beugende Oberflächenreliefs so genannte optisch dünne Gitter dar. Theoretische Überlegungen zeigen, dass beispielsweise für ein sinusförmig ausgestaltetes Gitter eine maximale Beugungseffizienz von etwa 34% erreichbar ist. Eine optisch dünne beugende Struktur oder dünnes Hologramm besitzt die Eigenschaft, dass es eine relativ geringe Winkelselektivität für eine Rekonstruktion und darüber hinaus eine geringe Wellenlängenselektivität bei einer Rekonstruktion aufweist. Beugende Oberflächenreliefs sind darüber hinaus im Wesentlichen Transmissionsstrukturen, d.h., dass zum Auslesen des beugenden Oberflächenreliefs verwendetes Licht, welches als Rekonstruktionslicht bezeichnet wird, mit dem in den beugenden Oberflächenreliefs gespeicherte Information sichtbar gemacht werden soll, im Wesentlichen transmittiert wird. Eine Reflexion an dem beugenden Oberflächenrelief findet dennoch als Grenzflächeneffekt statt. Dieser beruht darauf, dass das Medium, welches an die Oberfläche angrenzt, in der das Oberflächenrelief ausgebildet ist, einen anderen Beugungsindex als das Material aufweist, in dem das Oberflächenrelief ausgebildet ist. Ist das Oberflächenrelief in der obersten Schicht des Sicherheitsdokuments ausgebildet, so existiert eine Luft-Dokumentenoberflächen-Grenzfläche, an der eine Reflexion stattfindet, die in der Regel im einstelligen Prozentbereich liegt. An einer typischen Luft-Polymer-Grenzschicht wird ca. 4% des auftreffenden Lichts von dem beugenden Oberflächenrelief reflektierend gebeugt, d.h. in Reflexion gebeugt.

Da Sicherheitsdokumente in der Regel nicht transparent sind, sondern opake Schichten, insbesondere bedruckte Schichten oder farbige Schichten, umfassen, wird der transmittierte Teil des Rekonstruktionslichts in der Regel im Dokument diffus gestreut. Der aufgrund der diffusen Streuung austretende Anteil des Rekonstruktionslichts ist in der Regel sehr viel größer als der direkt an dem Oberflächenrelief reflektierend gebeugte Anteil des Rekonstruktionslichts, so dass ein Auslesen der in dem beugenden Oberflächenrelief enthaltenen Information nur schwer möglich ist.

In der WO2006/108607 A2 wird eine Transferfolie, insbesondere Heißprägefolie, beschrieben, die eine Trägerfolie und eine auf der Trägerfolie angeordnete und von der Trägerfolie ablösbare Übertragungslage mit einer Strukturschicht umfasst.

Die WO 0153113 zeigt einen Sicherheitsgegenstand, der ein lichtdurchlässiges Substrat mit einer ersten Oberfläche und einer gegenüberliegenden zweiten Oberfläche aufweist, wobei die erste Oberfläche ein optisches Interferenzmuster, wie beispielsweise ein holographisches Bildmuster oder ein optisches Beugungsmuster aufweist.

JP 10143057 beschreibt eine Anordnung, bei der ein Oberflächenreliefhologramm eines Bildes über einem als monochromatischer Reflektor wirkenden Lippmann-Volumenreflexionshologramm angeordnet ist. Unter dem Lippmann-Volumenreflexionshologramm befindet sich eine optische Absorptionsschicht, welche durch das Lippmann-Volumenreflexionshologramm transmittiertes Licht absorbiert.

Aus der US 2007/0013983 A1 sind eine holographische Projektionseinheit und -karte bekannt, bei denen ein Druck direkt auf das Substrat eines Transmissionshologramms ermöglicht wird. Die holographische Projektionseinheit ermöglicht es, eine Information oder ein Bild in der Nähe der Positionen von Punktlichtquellen sichtbar zu machen, wenn die Punktlichtquelle durch das Hologramm hindurch betrachtet wird. Die Projektionseinheit bzw. -karte umfasst ein transparentes Substrat, eine Hologrammschicht und eine Druckschicht. Um eine Punktlichtquelle durch das Hologramm hindurch betrachten zu können, umfasst die Projektionseinheit bzw. die Projektionskarte im Bereich des Hologramms eine Aussparung in der opaken Druckschicht.

Aus der WO 2008/131852 A1 ist ein Durchsichtsicherheitselement für Sicherheitspapiere, Wertdokumente und dergleichen bekannt, das zumindest ein erstes und ein zweites Sicherheitsmerkmal aufweist, die auf gegenüberliegenden Seiten des Sicherheitselements angeordnet sind. Hierbei ist vorgesehen, dass das erste Sicherheitsmerkmal ein in Reflexion erkennbares Sicherheitsmerkmal mit einem elektromagnetische Strahlung beeinflussenden Gittermuster aus einer Vielzahl von Strichgitterlinien ist, und das zweite Sicherheitsmerkmal ein in Transmission strahlformendes optisches Element ist.

Aus der JP 2001 315472 A ist ein Informationsaufzeichnungsmedium für eine Kredit- oder Bankkarte bekannt. Das Informationsaufzeichnungsmedium umfasst optisch beugende Strukturen auf einem transparenten Basismaterial, beispielsweise in Form eines Hologramms, welche sowohl von einer Vorderseite als auch einer Rückseite aus sichtbar sind.

Aus dem Stand der Technik ist es bekannt, das beugende Oberflächenrelief mit einer metallischen Schicht zu bedecken, diese beispielsweise aufzudampfen. Hierdurch wird eine Reflexion des beugenden Oberflächenreliefs gesteigert. Ein solches Metallisieren ist jedoch aufwendig und beeinflusst darüber hinaus eine Transparenz im Bereich des beugenden Oberflächenreliefs nachteilig. Der Erfindung liegt somit die technische Aufgabe zugrunde, ein Sicherheitsdokument und ein Verfahren zur Herstellung eines Sicherheitsdokuments zu schaffen, bei dem ein Auslesen der in dem beugenden Oberflächenrelief enthaltenen Information besser möglich ist, ohne dieses zu metallisieren.

Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheitsdokument, welches auch ein Wertdokument sein kann, verbunden, beispielsweise verklebt, werden kann. Es kann sich aber auch um einen integralen Bestandteil eines Sicherheitsdokuments handeln. Ein Beispiel für Ersteres ist ein auf ein Sicherheitsdokument aufklebbares Visum. Ein Beispiel für Letzteres ist ein in ein Ausweisdokument eingeprägtes beugendes Oberflächenrelief.

Ein Sicherheitsmerkmal ist eine Struktur, die nur mit (gegenüber einfachem Kopieren) erhöhtem Aufwand oder gar nicht unautorisiert herstellbar bzw. reproduzierbar ist.

Als Sicherheitsdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Wertdokumente, insbesondere Banknoten, Schecks, Postwertzeichen, Kreditkarten, beliebige Chipkarten und Haftetiketten (z.B. zur Produktsicherung). Solche Sicherheitsdokumente, die auch Wertdokumente umfassen, weisen einen Dokumentkörper auf.

Ein aus mehreren Schichten hergestellter Dokumentkörper ist ein Gegenstand, der aus mindestens zwei Schichten hergestellt ist. Mindestens eine dieser Schichten ist typischerweise eine Kunststoff- oder Papierschicht. Die mehreren Schichten umfassen in der Regel auch eine oder mehrere Druckschichten. Ein einfacher oder aus mehreren Schichten hergestellter Dokumentkörper umfasst beispielsweise eine Kunststofffolie, auf die eine Druckschicht aufgebracht ist. In der Regel wird ein Dokumentkörper jedoch aus mehreren Kunststoff- und/oder Papierschichten und/oder Druckschichten bestehen, die zu einem monolithischen Dokumentkörper mittels eines Laminationsverfahrens verbunden sind.

Ein Projektionshologramm, welches auch als Fourierhologramm bezeichnet wird, ist ein Hologramm, welches mit Licht (Rekonstruktionslicht) passender Wellenlänge und unter geeignetem Einfallswinkel beleuchtet werden kann, um rekonstruiert zu werden und hierbei eine Abbildung auf einen Schirm zu erzeugen. Das Rekonstruktionslicht ist in der Regel Licht eines Lasers. Klassischerweise werden Fourierhologramme erzeugt, indem ein Bild (Information) mit kohärentem Licht durch eine Fourierlinse abgebildet wird und in der Fourierebene mit einem hierzu kohärenten Referenzlicht zur Interferenz gebracht wird. Das Interferenzmuster wird in einem holografischen Aufzeichnungsmaterial, welches sich in der Fourierebene befindet, gespeichert. Die Speicherung kann in einem Oberflächenrelief durch eine räumliche Modulation der Absorption (Amplitudenhologramm) oder räumliche Modulation des Brechungsindexes (Phasenhologramm) erfolgen.

Als holografische Oberflächenstruktur oder beugende Oberflächenstruktur wird eine an einer Oberfläche einer Schicht und/oder Grenzfläche zwischen zwei unterschiedlichen Schichten ausgebildete beugende reliefartige Struktur, insbesondere ein Hologramm, bezeichnet, welches eine so genannte dünne beugende Struktur bzw. ein dünnes Hologramm ist. Eine solche Struktur weist eine geringe Winkelselektivität und eine geringe Wellenlängenselektivität hinsichtlich einer Rekonstruktion der in der beugenden Struktur bzw. dem Hologramm enthaltenen Information auf.

Ein Volumenhologramm ist in dem hier verwendeten Zusammenhang hingegen immer eine holografisch dicke Struktur, die eine hohe Wellenlängen- und Winkelselektivität hinsichtlich einer Rekonstruktion der hierin gespeicherten Information aufweist.

Als eine Beugungsschicht wird eine Schicht bezeichnet, in die eine beugende Oberflächenstruktur eingearbeitet ist oder wird. Sie kann als Schicht eine eigene Entität sein oder ein, quasi gedanklich abgeteilter, Bestandteil eines anderen Körpers, beispielsweise eines Dokumentkörpers oder Sicherheitsdokuments sein.

Ein Muster besteht typischerweise aus einer Vielzahl nebeneinander angeordneter Mustereinheiten bzw. Pixelpunkten. Die Mustereinheiten bzw. Pixel eines Musters sind einander zugeordnet und in definierter Weise lateral zueinander angeordnet, typischerweise in ein oder zwei Raumdimensionen, und ergeben in der Gesamtbetrachtung eine Darstellung, beispielsweise ein Bild, ein Symbol, ein Logo, einen Schriftzug (Buchstaben, Zahlen, alphanumerische Zeichen) oder einen Code (z.B. einen Strichcode). Ein Individualisierungsmuster ist ein Muster, welches zur Individualisierung verwendet wird.

Individualisierend ist ein Muster, wenn es einzigartig für eine Person oder einen Gegenstand oder eine Gruppe von Personen oder Gegenständen aus einer größeren Gesamtheit an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldscheine individualisierender Code ist die Wertigkeit. Für einen Geldschein individualisierend ist die Seriennummer. Nicht individualisierend ist ein Muster, welches für alle Elemente einer Gesamtheit identisch ist. Für Geldscheine ist dies beispielsweise ein Wappen, welches auf allen Geldscheinen aufgedruckt ist.

Eine Individualisierung eines über optische Interferenz in einem Aufzeichnungsmaterial gespeicherten Hologramms ist beispielsweise über eine räumliche Modulation des hierbei verwendeten Lichts möglich. Hierbei werden so genannte Spatial Light Modulatoren eingesetzt.

Ein Spatial Light Modulator (SLM) erlaubt eine zweidimensionale ortsaufgelöste Beleuchtung bzw. Bestrahlung eines meist flächigen Gegenstands mit modulierter Intensität. Hierbei kann es sich beispielsweise um einen DMD (Digital Micromirror Device) Chip, ein LCD (Liquid Crystal Display) Transmissionsdisplay oder LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne weiteres verschiedene Bilder oder Muster in zeitlicher Folge hintereinander generiert werden, beispielsweise in Form eines Passfotos.

Als gerichtete Reflexion wird eine Reflexion angesehen, die auf eine Struktur auftreffendes Licht nicht isotrop in einen Raumwinkelbereich von $2\pi$ vor der Struktur zurück lenkt, sondern bevorzugt in zumindest einen begrenzten Raumwinkelbereich lenkt. Als spiegelnde Schicht wird eine Schicht angesehen, die den Gesetzen der geometrischen Optik folgend Licht zumindest einer Wellenlänge, vorzugsweise unterschiedlicher Wellenlängen, nahezu vollständig reflektiert, d.h., in einen Raumwinkel lenkt. Eine spiegelnde Reflexion ist somit eine ausgezeichnete Form der gerichteten Reflexion. Ein Gegensatz zu der gerichteten Reflexion ist eine diffuse Rückstreuung von Licht.

Mit einer Reflexion an der beugenden Oberflächenstruktur ist jeweils eine Beugung in Reflexion gemeint. Diese Beugung tritt an der Oberfläche bzw. Oberseite, d.h. der Grenzfläche, der Beugungsschicht auf, in die die beugende Oberflächenstruktur eingebracht ist.

An der Grenzfläche "reflektiertes" Licht ist somit durch die Oberflächenstruktur gebeugtes Licht.

Grundzüge der Erfindung und bevorzugte Ausführungsformen

Zur Lösung der Aufgabe werden ein Sicherheitsdokument gemäß Anspruch 1 und ein entsprechendes Herstellungsverfahren gemäß Anspruch 7 vorgeschlagen.

Das Vorsehen einer Rauschunterdrückungsstruktur führt dazu, dass bei einer Rekonstruktion der beugenden Oberflächenstruktur ein Signal-Rauschverhältnis zwischen dem an der beugenden Oberflächenstruktur gebeugten bzw. direkt reflektierten Rekonstruktionslicht und dem diffus in dem Dokumentkörper gestreuten transmittierten Rekonstruktionslicht, welches bei der Rekonstruktion der beugenden Oberflächenstruktur durch diese transmittiert wird, verbessert wird. Die Rauschunterdrückungsstruktur ist somit als eine eine optische Ausbreitung des durch die beugende Oberflächenstruktur transmittierten Rekonstruktionslichts beeinflussende Struktur ausgebildet.

Die Erfindung sieht vor, dass die Rauschunterdrückungsstruktur ein Volumenhologramm umfasst, das mindestens eine Beugungsordnung des transmittierten Rekonstruktionslichts beugt und/oder reflektiert. Ein Volumenhologramm kann hierbei gezielt so hergestellt werden, dass es das transmittierte Rekonstruktionslicht einzelner, mehrerer oder aller Beugungsordnungen gezielt beeinflusst.

Während eine Individualisierung der beugenden Oberflächenstruktur je nach gewähltem Herstellungsverfahren sehr aufwendig oder sogar unter praktischen Gesichtspunkten unmöglich ist, beispielsweise wenn die beugende Oberflächenstruktur ein mittels einer Prägung hergestelltes Oberflächenrelief ist, lässt sich ein Volumenhologramm, welches optisch holografisch hergestellt wird, einfach individualisiert herstellen, indem das zur Herstellung verwendete kohärente Licht mittels eines Spatial Light Modulators räumlich amplitudenmoduliert wird. Die Erfindung sieht somit vor, dass in das Volumenhologramm mindestens ein Muster codiert ist.

Bei der Erfindung ist vorgesehen, dass das in das Volumenhologramm codierte Muster ein Musterbestandteil eines Gesamtmusters ist und eine Reflexion an der Grenzfläche des Oberflächenreliefs einen weiteren Musterbestandteil des Gesamtmusters rekonstruiert und ein ausgezeichneter Inzidenzwinkel für das auf die beugende Oberflächenstruktur auftreffende Rekonstruktionslicht zum Auslesen existiert, so dass mindestens eine Beugungsordnung des unter diesem ausgezeichneten Inzidenzwinkel auf die beugende Oberflächenstruktur auftreffenden und durch die beugende Oberflächenstruktur transmittierten Rekonstruktionslichts das Volumenhologramm so rekonstruiert, dass der mindestens eine Musterbestandteil rekonstruiert wird und sich mit dem weiteren Musterbestandteil zu dem Gesamtmuster ergänzt. Das Volumenhologramm wird somit so hergestellt und angeordnet und mit der beugenden Oberflächenstruktur abgestimmt, dass sich die Rekonstruktion des in dem Volumenhologramm gespeicherten Musters und die Rekonstruktion des in der beugenden Oberflächenstruktur gespeicherten weiteren Musters bei Beleuchtung der beugenden Oberflächenstruktur unter dem ausgezeichneten Inzidenzwinkel überlagern und ein Gesamtmuster rekonstruieren. Da die beugende Oberflächenstruktur hinsichtlich des Rekonstruktionswinkels relativ unselektiv ist, kann bei einer Beleuchtung der beugenden Oberflächenstruktur unter einem von dem ausgezeichneten Inzidenzwinkel abweichenden Rekonstruktionswinkel nur das weitere Muster, welches in der beugenden Oberflächenstruktur gespeichert ist, rekonstruiert werden. Nur unter dem ausgezeichneten Inzidenzwinkel wird zusätzlich das in dem Volumenhologramm gespeicherte Muster ebenfalls rekonstruiert und überlagert sich mit dem weiteren Muster zu dem Gesamtmuster. Dieses kombinierte Sicherheitsmerkmal ist ebenfalls erheblich schwerer zu fälschen als die beugende Oberflächenstruktur alleine.

Bei einer bevorzugten Ausführungsform der Erfindung ist vorgesehen, dass als Rauschunterdrückungsstruktur ein transparenter Kanal ausgebildet wird, der einen Austritt zumindest eines Teils des durch die beugende Oberflächenstruktur transmittierten Rekonstruktionslichts aus einer von der Oberseite der mindestens einen Beugungsschicht abgewandten Seitenfläche des Dokuments ermöglicht, wobei der Transmissionskanal sich durch mindestens eine der mehreren Schichten erstreckt, die zumindest teilweise opak oder transluzent ist. Der transparente Kanal wird als Rauschunterdrückungsstruktur ausgebildet, so dass zumindest ein Teil des durch die beugende Oberflächenstruktur transmittierten Rekonstruktionslichts aus einer Seite des Dokumentkörpers austritt, die von der Oberseite der Beugungsschicht abgewandt ist. An der beugenden Oberflächenstruktur reflektierend gebeugtes Rekonstruktionslicht kann somit fast ungestört auf einem Schirm abgebildet und ausgewertet werden. Ebenso kann das aus dem Transmissionskanal austretende Licht auf einem weiteren Schirm abgebildet werden und hierüber die in der beugenden Oberflächenstruktur gespeicherte Information ausgelesen werden.

Eine andere Ausführungsform der Erfindung sieht vor, dass eine gerichtete Reflexion zumindest eines Teils des durch die beugende Oberflächenstruktur transmittierten Rekonstruktionslichts genutzt wird, um die Information der beugenden Oberflächenstruktur verbessert auslesen zu können. Hierbei kann beispielsweise ausgenutzt werden, dass die gespeicherte Information in den höheren Beugungsordnungen des transmittierten Rekonstruktionslichts enthalten ist. Durch eine gezielte Reflexion des transmittierten Rekonstruktionslichts kann dieses auf den Schirm gelenkt werden, der zur Abbildung der in der beugenden Oberflächenstruktur enthaltenen Information verwendet wird. Eine bevorzugte Ausführungsform der Erfindung sieht somit vor, dass die Rauschunterdrückungsstruktur ein Reflexionselement umfasst, welches eine gerichtete Reflexion zumindest eines Teils des durch die beugende Oberflächenstruktur transmittierten Rekonstruktionslichts unterstützt.

Bei einer Ausführungsform der Erfindung ist vorgesehen, dass als Reflexionselement eine spiegelnde Schicht eingebracht wird oder auf eine Schicht ein spiegelnder Abschnitt aufgebracht wird. Eine polierte Metallfolie stellt beispielsweise eine solche spiegelnde Schicht dar. Ebenso sind dem Fachmann Farben bekannt, die drucktechnisch aufgebracht werden können und ebenfalls spiegelnd wirken. Alternativ kann beispielsweise ein Bereich einer Schicht mit einem Metall bedampft werden.

Eine Ausführungsform der Erfindung sieht vor, dass das Reflexionselement so angeordnet und ausgestaltet ist, dass das durch die beugende Oberflächenstruktur transmittierte Rekonstruktionslicht an dem Reflexionselement in der Weise reflektiert wird, dass es sich mit dem an der Grenzfläche der beugenden Oberflächenstruktur reflektierend gebeugten Rekonstruktionslicht überlagert. Hierbei wird sowohl die Reflexionsintensität an der Grenzfläche als auch die Intensität des an dem Reflexionselement reflektierten transmittierten Rekonstruktionslichts, welches durch die beugende Oberflächenstruktur gebeugt ist, zur Abbildung der Information auf einem Schirm genutzt.

Andere Ausführungsformen können Druckfarben verwenden, die eine gerichtete Reflexion zumindest einer oder mehrerer Wellenlängen oder eines Spektralbereichs unterstützen.

Eine bevorzugte Ausführungsform der Erfindung sieht vor, dass das Reflexionselement einen mit einer optisch variablen Farbe (optical variable ink) bedeckten Abschnitt umfasst, wobei eine Reflexion für zumindest eine spektrale Farbe ein Maximum bei einem Betrachtungswinkel aufweist, der um einen Abweichungswinkel von einem Reflexionswinkel gemäß der geometrischen Optik abweicht. Eine solche Farbe besitzt eine nicht isotrope Reflexionseigenschaft, was ausgenutzt werden kann, um das Signalrauschverhältnis beim Auslesen der Information aus der beugenden Oberflächenstruktur zu reduzieren. Hierbei wird die beugende Oberflächenstruktur vorzugsweise an die entsprechend als Rauschunterdrückungsstruktur verwendete optisch variable Farbe angepasst.

Bei einer bevorzugten Ausführungsform der Erfindung ist vorgesehen, dass die beugende Oberflächenstruktur so ausgebildet ist, dass ein weiterer ausgezeichneter Inzidenzwinkel für das Rekonstruktionslicht zum Auslesen existiert, so dass unter diesem weiteren ausgezeichneten Inzidenzwinkel auf die beugende Oberflächenstruktur auftreffendes Rekonstruktionslicht unter dem Abweichungswinkel der optisch variablen Farbe auf diese optische variable Farbe trifft und senkrecht zu der Oberseite der Beugungsschicht durch diese zurückreflektiert wird. Senkrecht bezieht sich hier auf die Oberfläche der Beugungsschicht als Ganzes und nicht auf ein lokales Oberflächenelement des Oberflächenreliefs. Hierdurch wird ein kombiniertes Sicherheitsmerkmal geschaffen. Unter dem weiteren ausgezeichneten Inzidenzwinkel eingestrahltes Rekonstruktionslicht der richtigen Wellenlänge für die Rekonstruktion der beugenden Oberflächenstruktur wird die Information, die in dem beugenden Oberflächenrelief gespeichert ist, unter einem Winkel reproduziert, der von einem Winkel abweicht, der sich aus der geometrischen Optik bzw. dem Beugungsverhalten und hiermit verknüpft im Reflexionsverhalten aufgrund der Beugung/Reflexion des Rekonstruktionslichts an der beugenden Oberflächenstruktur ergibt. Bei einem Sicherheitsdokument, bei dem zwar die beugende Oberflächenstruktur enthalten ist, jedoch die optisch variable Farbe nicht entsprechend als Rauschunterdrückungselement in dem Dokumentkörper eingebracht ist, kann zwar die in der beugenden Oberflächenstruktur gespeicherte Information bei Beleuchtung unter dem weiteren ausgezeichneten Inzidenzwinkel rekonstruiert werden, jedoch nicht unter einem Betrachtungswinkel senkrecht auf das Sicherheitsdokument mit maximaler Intensität wahrgenommen werden.

Bei einer anderen Ausführungsform der Erfindung ist vorgesehen, dass die Rauschunterdrückungsstruktur zusätzlich ein Absorptionselement umfasst, das das durch die beugende Oberflächenstruktur transmittierte Rekonstruktionslicht zumindest teilweise absorbiert. Hierzu eignen sich insbesondere schwarze Schichten oder Schichten einer komplementären Farbe zu der durch die Wellenlänge des Rekonstruktionslichts definierten Farbe, mit der die beugende Oberflächenstruktur rekonstruiert wird. Ist die beugende Oberflächenstruktur beispielsweise ausgestaltet, um mit

rotem Rekonstruktionslicht rekonstruiert zu werden, so wird als absorbierende Farbe vorzugsweise eine Cyanfarbe verwendet, die nicht im roten Wellenlängenbereich absorbiert. Die Absorption führt dazu, dass kein diffus gestreutes Licht aus dem Dokumentkörper austritt und einen Nachweis des direkt an der Grenzfläche der beugenden Oberflächenstruktur erzeugten Rekonstruktionslichts erschwert.

Bei einer Ausführungsform der Erfindung reflektiert das Volumenhologramm transmittiertes Rekonstruktionslicht der nullten Beugungsordnung. Indem dieses gezielt unter einem Winkel reflektiert wird, dass es nicht mit dem direkt an der Grenzfläche der beugenden Oberflächenstruktur reflektierend gebeugten Rekonstruktionslicht zusammentrifft, kann dieses unbeeinflusst durch das transmittierte Licht der nullten Ordnung, welches einen wesentlichen Anteil der Intensität des Rekonstruktionslichts umfasst, auf einem Schirm abgebildet und nachgewiesen werden. Ebenso ist es möglich, wenn die Rauschunterdrückungsstruktur zusätzlich einen Transmissionskanal umfasst, die in den höheren und/oder niedrigeren Beugungsordnungen enthaltene Information ohne störende Einflüsse des transmittierten Rekonstruktionslichts nullter Ordnung auf der Dokumentseite nachzuweisen, die von der Oberseite der Beugungsschicht abgewandt ist.

Durch mehrfaches Belichten des Volumenhologramms unter unterschiedlichen Winkeln oder ein Verwenden mehrerer Volumenhologramme kann erreicht werden, dass das Volumenhologramm oder die Volumenhologramme die unterschiedlichen Beugungsordnungen der beugenden Oberflächenstruktur in dem transmittierten Rekonstruktionslicht selektiv beugen und/oder reflektieren kann oder können.

Um beispielsweise zu erreichen, dass bei einem erfindungsgemäßen Ausführungsbeispiel unter den Winkeln, die nicht dem ausgezeichneten Inzidenzwinkel entsprechen, das transmittierte Rekonstruktionslicht einen Nachweis des an der Grenzfläche reflektierend gebeugten Rekonstruktionslichts stört, ist bei einer bevorzugten Ausführungsform zusätzlich ein (das) Absorptionselement auf der von der beugenden Oberflächenstruktur abgewandten Seite des Volumenhologramms angeordnet, um durch das Volumenhologramm transmittiertes Licht zu absorbieren. Diese Ausführungsform eignet sich auch in anderen Ausführungsformen, beispielsweise kann das Volumenhologramm so ausgebildet sein, dass das Licht der ersten Beugungsordnung des transmittierten Rekonstruktionslichts reflektiert wird und das Licht der nullten Beugungsordnung durch das Volumenhologramm nicht gebeugt und/oder reflektiert wird. Dieses kann dann von dem Absorptionselement absorbiert werden.

Bei einer bevorzugten Ausführungsform ist somit vorgesehen, dass das Volumenhologramm ausgebildet ist, mindestens eine, beispielsweise von der nullten Ordnung verschiedene, Beugungsordnung des durch die beugende Oberflächenstruktur transmittierten Rekonstruktionslichts durch die Oberseite der Beugungsschicht zurückreflektierend zu beugen.

Da das Volumenhologramm ein Muster enthält, sind auch Ausführungsformen vorteilhaft, bei denen die nullte Ordnung des durch die beugende Oberflächenstruktur transmittierten Rekonstruktionslichts zur Rekonstruktion des Volumenhologramms verwendet wird, bei der dieses Rekonstruktionslicht reflektierend gebeugt wird.

Bei einer Ausführungsform der Erfindung ist vorgesehen, dass die Rauschunterdrückungsstruktur eine Streuung des Rekonstruktionslichts herbeiführt, die so gerichtet ist, dass ein Austreten des Rekonstruktionslichts durch die Oberseite zumindest in der Richtung des direkt an der Grenzfläche der beugenden Oberflächenstruktur reflektierend gebeugten Rekonstruktionslichts deutlich reduziert ist oder nicht auftritt, beispielsweise aufgrund von Totalreflexion an der Grenzfläche.

Die beugende Oberflächenstruktur, das oder die Volumenhologramme können für eine optische Rekonstruktion der gespeicherten Information mit sichtbarem, ultravioletten und/oder infrarotem Licht ausgebildet sein. Entsprechend kann die Wellenlänge des Rekonstruktionslichts aus den zugehörigen Wellenlängenbereichen gewählt werden.

Es ergibt sich für den Fachmann, dass in das Sicherheitsdokument eine Vielzahl weiterer unterschiedlicher oder gleicher Sicherheitselemente integriert werden kann. Die mehreren Schichten werden vorzugsweise in einem Laminationsverfahren zu einem monolithischen Dokumentkörper, der vorzugsweise eine Kartenform aufweist, verbunden.

Nachfolgend wird die Erfindung unter Bezugnahme auf eine Zeichnung näher erläutert. Hierbei zeigen:

Fig. 1    eine schematische Ansicht eines Sicherheitsdokuments mit einer beugenden Oberflächenstruktur;

Fig. 2    eine schematische Darstellung eines Sicherheitsdokuments zum Erläutern einer minimalen Ausdehnung eines Transmissionskanals in dem Sicherheitsdokument;

Fig. 3    eine schematische Darstellung eines Sicherheitsdokuments mit einem Reflexionselement als Rauschunterdrückungsstruktur;

Fig. 4    eine schematische Darstellung eines Sicherheitsdokuments mit einem Absorptionselement als Rauschunterdrückungsstruktur;

Fig. 5    eine schematische Darstellung eines Sicherheitsdokuments mit einer beugenden Oberflächenstruktur und einem Reflexionselement als Rauschunterdrückungsstruktur, welches eine variable optische Farbe umfasst;

Fig. 6    eine weitere schematische Darstellung eines Sicherheitsdokuments mit einer beugenden Oberflächenstruktur, welches als Rauschunterdrückungselement ein eine Beugungsordnung reflektierendes Volumenhologramm und ein Absorptionselement umfasst;

Fig. 7a    eine weitere schematische Darstellung eines Sicherheitsdokuments mit einer beugenden Oberflächenstruktur sowie einem Volumenhologramm und einem Absorptionselement als Rauschunterdrückungsstruktur, bei dem in dem Volumenhologramm und der beugenden Oberflächenstruktur jeweils ein Teilmuster eines Gesamtmusters gespeichert sind, wobei das Sicherheitsdokument mit Rekonstruktionslicht unter einem ausgezeichneten Beleuchtungswinkel für eine Rekonstruktion beleuchtet wird;

Fig. 7b    eine Ansicht des Sicherheitsdokuments nach Fig. 7a, bei der eine Beleuchtung mit Rekonstruktionslicht unter einem anderen Winkel als dem ausgezeichneten Beleuchtungswinkel für eine Rekonstruktion beleuchtet wird;

Fig. 7c    unterschiedliche auf einem Schirm zu beobachtende Rekonstruktionsergebnisse, aufgetragen gegen unterschiedliche Beleuchtungswinkel für das Sicherheitsdokument nach Fig. 7a und 7b; und

Fig. 8    ein Sicherheitsdokument mit einer beugenden Oberflächenstruktur und einer als Volumenhologramm ausgebildeten Rauschunterdrückungsstruktur, welches eine nullte Beugungsordnung eines transmittierten Rekonstruktionslichts reflektiert.

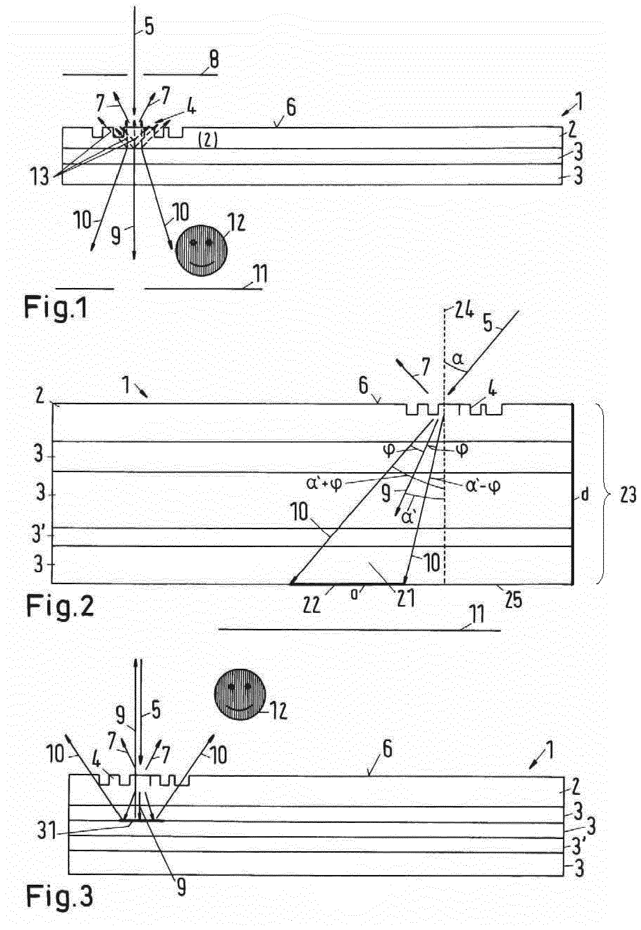

In Fig. 1 ist schematisch ein Sicherheitsdokument 1 dargestellt. Dieses ist aus einer Beugungsschicht 2 sowie bevorzugt mehreren weiteren Schichten 3 hergestellt. Die Beugungsschicht 2 und die mehreren Schichten 3 sind vorzugsweise Kunststoffschichten, Druckschichten und/oder auf Papierbasis hergestellte Schichten. Bei den verwendeten Kunststoffen handelt es sich vorzugsweise um Polyethylenterephthalat (PET) und dessen Derivate, insbesondere PET-G, sowie Polycarbonate, insbesondere Bisphenol-A-Polycarbonat. Als andere Kunststoffe kommen Polyvinylchlorid (PVC), Acrylnitril-Butadien-Styrol (ABS) sowie Verbundmaterialien wie Teslin zum Einsatz. Auch andere Verbundstoffe, die beispielsweise PET und PC enthalten, werden verwendet. Um insbesondere Mikrochips und/oder RFID-Antennen usw. in Sicherheitsdokumente zu integrieren, werden ebenso Polyurethanschichten für die Herstellung von Sicherheitsdokumenten verwendet. Darüber hinaus werden Papierschichten genutzt, insbesondere, weil diese drucktechnisch besonders gut zu verarbeiten sind sowie weitere Sicherheitsmerkmale, wie z.B. Wasserzeichen, enthalten können. Zusätzlich können auf diese Kunststoffe- und/oder Papierschichten Druckschichten aufgebracht sein. Die gegebenenfalls bedruckten Kunststoff- und/oder Papierschichten werden vorzugsweise in einem Laminationsverfahren bei Temperaturen im Bereich oberhalb von 100°C, bevorzugt oberhalb von 120°C und am bevorzugtesten oberhalb von 140°C unter Drücken von 50 bar oder mehr zu einem monolithischen Dokumentkörper laminiert. Besonders bevorzugt findet der Laminationsprozess unter Vakuumbedingungen zeitgesteuert statt.

Als mindestens ein Sicherheitselement des Sicherheitsdokuments 1 wird bei der Herstellung des Sicherheitsdokuments 1 in die Beugungsschicht 2 eine beugende Oberflächenstruktur 4 eingebracht. Bei der beugenden Oberflächenstruktur 4 handelt es sich um eine holografische Struktur, in der eine Information gespeichert ist. Bei der klassischen Holografie ist die gespeicherte Information in einem Interferenzmuster zweier kohärenter Lichtstrahlen enthalten, welches in einem fotografischen Material aufgezeichnet wird. Dies bedeutet, dass sich eine räumliche Intensitätsverteilung der interferierenden kohärenten Lichtstrahlen ergibt. In der klassischen Holografie bildet diese Intensitätsverteilung in dem holografischen Aufzeichnungsmaterial ab, beispielsweise durch ein Oberflächenrelief oder durch räumliche Modulation einer Absorption (Amplitudenhologramm) oder eine räumliche Modulation eines Brechungsindexes (Phasenhologramm). In einem einfachen Beispiel einer Interferenz zweier ebener Wellen

$$\vec{E}_{1.2} = \vec{E}_{1.2}^{0} \cdot e^{i(\vec{k}_{1.2} \cdot \vec{r} - \omega t)}$$

erhält man eine periodische Oberflächenmodulation mit einer räumlichen Frequenz von

$$cos\left(\frac{2\pi}{\Lambda} x\right),$$

wobei

$$\Lambda = \lambda / 2n \sin\theta$$

ist und $\lambda$ die Wellenlänge ist, n der Brechungsindex des Materials ist und die beiden kohärenten Lichtstrahlen unter dem Winkel $2\theta$ aufeinander treffen. Im Idealfall gleicher Intensitäten der beiden kohärenten Lichtstrahlen geht die Lichtintensität im Interferenzmuster periodisch bis auf Null zurück. Wird die holografische Struktur lediglich in die Oberfläche der Beugungsschicht 2 als Oberflächenrelief eingebracht, so ergibt sich in der Regel ein so genanntes optisch dünnes Hologramm. Dies bedeutet, dass eine Selektivität hinsichtlich einer Rekonstruktionswellenlänge, die bei einem Hologramm in der Regel der Wellenlänge des Lichts entspricht, mit der die holografische Struktur erzeugt ist, und eine Selektivität hinsichtlich eines Einstrahlwinkels für die Rekonstruktion, der durch die Geometrie bei der Herstellung des Hologramms festgelegt ist, jeweils gering ist. Im Gegensatz zu einem optisch dicken Hologramm, bei dem sich die holografische aufgezeichnete Struktur über einen Volumenbereich erstreckt und hierdurch eine so genannte Bragg-Bedingung streng erfüllt sein muss und sowohl eine hohe Winkel- als auch eine hohe Wellenlängenselektivität gegeben ist, kann bei einer optisch dünnen beugenden Oberflächenstruktur eine Rekonstruktion der gespeicherten Information mittels Lichts unterschiedlicher Wellenlängen und unterschiedlichen Einstrahlwinkeln erfolgen, ohne dass eine Beugungseffizienz nennenswert abnimmt.

Insgesamt ist jedoch eine maximal zu erreichende Beugungseffizienz für beugende Oberflächenstrukturen, die optisch dünne holografische Strukturen sind, begrenzt, beispielsweise für sinusförmiges Gitter theoretisch auf etwa 34%.

Neben der Möglichkeit, holografische Strukturen, d.h. beugende Strukturen, in denen eine Information gespeichert ist, mittels einer Aufzeichnung einer Interferenz in einem Aufzeichnungsmaterial zu erzeugen, gibt es weitere Möglichkeiten. Eine Möglichkeit besteht darin, ein Oberflächenrelief in eine Oberfläche einzuprägen. Hierbei lässt sich eine optimale Tiefe einer beugenden geprägten Struktur für eine maximale Beugungseffizienz im Falle eines binären Gitters angeben als:

$$d = \frac{\lambda \cos\theta}{2\Delta n},$$

wobei d die Tiefe der Prägungsstruktur, $\lambda$ die Wellenlänge und $\theta$ den Einfallswinkel des Rekonstruktionslichts gegen eine Oberflächennormale angeben. Für typische Diodenlaser, die Licht in rotem Wellenlängenbereich bei etwa 635 nm erzeugen, ergibt sich bei einem typischen Brechungsindexunterschied von 0,4 an einer Grenzfläche des Oberflächenreliefs eine Tiefe von etwa 780 nm. Typische Streifenabstände resultieren aus Verifikationsbedingungen, bei denen man einen Winkel von beispielsweise 20° zwischen dem die beugende Oberflächenstruktur beleuchtenden Rekonstruktionslicht, beispielsweise Laserlicht, sowie dem rekonstruierten Licht, erzeugen möchte. Hieraus resultieren Streifenabstände im Bereich von 1,3 $\mu$m oder kleiner. Um somit eine beugende Oberflächenstruktur zu prägen, benötigt man ein Prägeblech mit Beugungsstrukturen mit einer Tiefe von rund 350 bis 875 nm mit typischen Abständen "Berg zu Berg" von 1,3 $\mu$m oder kleiner.

Die Beugungsstrukturen für ein solches Prägeblech werden typischerweise errechnet. Das Prägeblech muss ein Negativ der gewünschten beugenden Oberflächenstruktur aufweisen und somit erhabene Strukturen umfassen. Dem Fachmann sind Verfahren zur Herstellung solcher beugenden Oberflächenstrukturen, die geprägt werden, grundsätzlich bekannt. Verfahren zur Herstellung der Prägebleche nutzen beispielsweise optische Lithografieverfahren oder elektronenstrahllithografische Verfahren.

Grundsätzlich sind unterschiedliche Möglichkeiten gegeben, die beugende Oberflächenstruktur in den Dokumentkörper einzuprägen. Der Prägevorgang kann während des Laminierens, d.h. im erwärmten Zustand, erfolgen oder im kalten Zustand in den bereits fertig erstellten Dokumentkörper eingeprägt werden. In ersterem Falle ist zu beachten, dass das Material der Beugungsschicht 4 sich mit dem Prägeblech thermisch angepasst ausdehnen können muss und beim Abkühlen seine Form verändert. Diese thermischen Effekte können jedoch bei der Berechnung der Prägestrukturen berechnet und einbezogen werden. Findet ein Prägen im kalten Zustand in dem bereits fertig gestellten Dokumentkörper statt, sind solche temperaturabhängigen Effekte nicht zu berücksichtigen.

Alternativ lassen sich Beugungsstrukturen durch gepulste Holografie in einen Dokumentkörper einbringen. Hierzu wird der Dokumentkörper mit Laserstrahlung geeigneter Wellenlänge holografisch bestrahlt. Eine geeignete Wellenlänge zeichnet sich dadurch aus, dass sie eine hohe Absorption an der Oberfläche in dem Material der Beugungsschicht aufweist. Bei dieser Methode wird beispielsweise ein Laserpuls durch einen Strahlteiler geteilt. Der erste Teilpuls trifft auf ein Muster, welches beispielsweise von einem Spatial Light Modulator erzeugt ist. Der Spatial Light Modulator kann ein individualisierendes Muster oder ein statisches, nicht individualisierendes Muster darstellen. Ebenso kann ein statisches Muster anstelle eines Spatial Light Modulators verwendet werden. Der durch den Spatial Light Modulator in seinem Querschnitt amplitudenmodulierte Teilpuls wird durch eine Fourierlinse geschickt und fouriertransformiert auf das Dokument abgebildet. Der zweite Teilpuls trifft direkt oder über eine Abbildungsoptik auf das Dokument, so dass an der Dokumentoberfläche eine Kohärenzbedingung der beiden Teilpulse gegeben ist. Der zweite Teilpuls nimmt somit die Rolle eines Referenzstrahls der Holografie ein. Bei geeigneter Absorption in dem Material der Beugungsschicht und geeigneter Energie des kohärenten Lichts (Laserlichts) bildet sich als beugende Oberflächenstruktur ein Oberflächenrelief aus. Für die hierbei verwendeten Pulslängen des kohärenten Lichts liegen vorzugsweise im Nanosekundenbereich.

Als Oberflächenrelief ausgeprägte beugende Oberflächenstrukturen transmittieren den größten Teil des Rekonstruktionslichts 5, der auf sie auftrifft. In Fig. 1 ist die beugende Oberflächenstruktur 4 der Beugungsschicht 2 so berechnet und hergestellt, beispielsweise bei einer Lamination der Beugungsschicht 2 mit den mehreren weiteren Schichten 3 zu einem Dokumentkörper eingeprägt, dass Rekonstruktionslicht 5 für eine optimale Beugungseffizienz senkrecht auf eine Oberseite 6 der Beugungsschicht 2 auftrifft. Etwa ein Anteil von 4% des Rekonstruktionslichts 5 wird an einer Grenzfläche zwischen der das Sicherheitsdokument umgebenden Luft (oder gegebenenfalls einem Vakuum) und der Beugungsschicht 2 an der beugenden Oberflächenstruktur 4 in Reflexion gebeugt. Dieses reflektierend gebeugte Rekonstruktionslicht 7 umfasst die in der beugenden Oberflächenstruktur 4 gespeicherte Information. Diese Information wird bei einer Abbildung des reflektierend gebeugten Rekonstruktionslichts auf einem Schirm 8 sichtbar.

Der nicht an der Grenzfläche der Oberflächenstruktur 4 direkt reflektierend gebeugte Anteil des Rekonstruktionslichts wird durch die beugende Oberflächenstruktur 4 transmittiert. In Fig. 1 sind schematisch das transmittierte Rekonstruktionslicht 9 in der nullten Beugungsordnung sowie das gebeugte transmittierte Rekonstruktionslicht 10 der ersten beiden Beugungsordnungen dargestellt. Ebenso wie das direkt reflektierend gebeugte Rekonstruktionslicht 7 kann das transmittierte gebeugte Rekonstruktionslicht 10 auf einem weiteren Schirm 11 aufgefangen werden, so dass in der beugenden Oberflächenstruktur gespeicherte Information 12, die hier beispielhaft als Gesicht dargestellt ist, sichtbar gemacht wird.

Die bisherige Beschreibung des Dokuments nach Fig. 1 geht davon aus, dass die Beugungsschicht als auch die mehreren weiteren Schichten 3 für das Rekonstruktionslicht transparent sind. In der Regel sind jedoch die mehreren weiteren Schichten 3, die auch Druckschichten umfassen können, nicht alle transparent.

Nimmt man im Folgenden an, dass beispielsweise die an die Beugungsschicht 2 angrenzende weitere Schicht 3' opak oder transluzent usw. ist, tritt an dieser weiteren Schicht 3' eine diffuse Streuung des transmittierten Rekonstruktionslichts 9, 10 auf. Dieses diffus gestreute Rekonstruktionslicht 13 tritt erneut durch die Beugungsschicht und aus der Oberseite 6 hindurch aus und überlagert sich mit dem direkt reflektierend gebeugten Rekonstruktionslicht 7 auf dem Schirm 8. Dieses diffus gestreute Rekonstruktionslicht 13 ist gestrichelt eingezeichnet. Da der größte Teil des Rekonstruktionslichts ursprünglich durch die beugende Oberflächenstruktur 4 transmittiert und anschließend diffus gestreut wurde, ist die Intensität des diffus gestreuten Rekonstruktionslichts 13 in der Regel größer als die Intensität des direkt reflektierend gebeugten Rekonstruktionslichts 7, so dass eine Beobachtung der Information auf dem Schirm 8 schwierig oder unmöglich ist. Da ein Signal, welches durch das direkt reflektierend gebeugte Rekonstruktionslicht 7 präsentiert wird, ist im Verhältnis zu einem Rauschen, welches durch das diffus gestreute Rekonstruktionslicht 13 repräsentiert wird, klein. Dies bedeutet, ein Signal zu Rauschverhältnis wird durch das Rauschen (das diffus gestreute Rekonstruktionslicht 13) dominiert.

Um dieses Signal zu Rauschverhältnis zu verbessern, werden unterschiedliche Rauschunterdrückungsstrukturen beschrieben. Ziel ist es jeweils, eine diffuse Streuung des transmittierten Rekonstruktionslichts zu minimieren und/oder gänzlich zu unterbinden.

In Fig. 2 ist ein Sicherheitsdokument mit einer beugenden Oberflächenstruktur 4 dargestellt, welches einen Transmissionskanal 21 umfasst. Das Dokument wird so ausgeführt, dass sämtliche der mehreren Schichten 3, die zumindest teilweise opak sind, in dem Bereich des transparenten Kanals 21 transparent sind. Bei den opaken Schichten 3' der mehreren Schichten 3 handelt es sich in der Regel um Druckschichten. Diese können transparent ausgestaltet werden, indem in dem Bereich des transparenten Kanals 21 keine Farbe oder eine Farbe aufgebracht wird, die für das transmittierte Rekonstruktionslicht 9, 10 transparent ist. Bei Kunststoffschichten, die opak oder transluzent usw. für das transmittierte Rekonstruktionslicht 9, 10 sind, können Aussparungen eingebracht werden, so dass sich ein transparenter Rekonstruktionskanal 21 ergibt. Hierbei wird das Dokument vorzugsweise so aufgebaut, dass Aussparungen in

einzelnen Schichten 3' während eines Laminationsverfahrens durch Material aus darüber oder darunter liegenden transparenten Schichten 3 gefüllt wird.

Ist eine der mehreren weiteren Schichten 3 aus einem Papiermaterial gefertigt, so kann ein entsprechender Bereich in einen transparenten Zustand mittels einer Zugabe von Chemikalien überführt werden, wie dies beispielsweise in DE 10 2004 053 367 A1 beschrieben ist.

Eine minimale Ausdehnung a 22 des transparenten Kanals 21 in Abhängigkeit von einem Abstand d 23 von der Oberseite 6 der Beugungsschicht 2 muss so gewählt sein, dass durch den transparenten Kanal 21 mindestens die eine Beobachtung des reflektierend gebeugten Rekonstruktionslichts störenden transmittierten Beugungsordnungen 10 und der transmittierte Rekonstruktionslichtstrahl 9 hindurch austreten können. In der Fig. 2 gibt d einen senkrechten Abstand 23 von der Oberseite 6 der Beugungsschicht 2, $n_1$ den Brechungsindex außerhalb des Sicherheitsdokuments 1, $n_2$ den Brechungsindex des Materials des Sicherheitsdokuments 1 (hierbei wird davon ausgegangen, dass die Beugungsschicht 2 und die mehreren weiteren Schichten 3 denselben Brechungsindex $n_2$ aufweisen), $\alpha$ den Einfallswinkel des Rekonstruktionslichts 5 gemessen gegen eine Flächennormale 24 der Oberseite 6 der Beugungsschicht 2 und $\varphi$ den Beugungswinkel erster Ordnung 10 im Vergleich zum Strahl 10 nullter Ordnung 9 in dem Dokument an.

Bei einem Sicherheitsdokument 1, welches einen Transmissionskanal 21 als Rauschunterdrückungsstruktur umfasst, findet eine Rekonstruktion der in der beugenden Oberflächenstruktur gespeicherten Information auf dem Schirm 11 statt, der benachbart zu einer von der Oberseite 6 der Beugungsschicht abgewandten Seite 25 des Dokuments angeordnet ist.

Angegeben ist eine minimale Ausdehnung des Transmissionskanals. Selbstverständlich kann dieser breiter ausgeführt sein.

In Fig. 3 ist ein weiteres Sicherheitsdokument 1 gezeigt, in dem ein Reflexionselement 31 als Rauschunterdrückungsstruktur eingebracht ist. Im dargestellten Beispiel ist angenommen, dass das Reflexionselement 31 spiegelnd ausgebildet ist und zumindest das transmittierte Licht 9, 10 einer vorgegebenen Rekonstruktionswellenlänge gemäß den Gesetzen der geometrischen Optik nahezu vollständig reflektiert. Als Reflexionselement kann beispielsweise eine der mehreren Schichten als Teilschicht ausgebildet sein, die beispielsweise mit den übrigen der mehreren Schichten 3 und/oder der Beugungsschicht 2 verklebt ist. Ebenso kann ein Teil einer der weiteren Schichten 3 mit einer Metallschicht bedampft sein. Ebenso ist es möglich, einen Abschnitt einer Metallfolie vor einem Laminieren auf eine der mehreren weiteren Schichten 3 aufzubringen, beispielsweise aufzukleben. Bei dem dargestellten Sicherheitsdokument wird das transmittierte Rekonstruktionslicht 9 der nullten Ordnung in Richtung des einfallenden Rekonstruktionslichts 5 zurückreflektiert. Das transmittierte Rekonstruktionslicht 10 der höheren Beugungsordnungen wird durch die Oberseite 6 der Beugungsschicht 2 hindurch reflektiert und kann gemeinsam mit dem direkt reflektierend gebeugten Rekonstruktionslicht 7 auf dem Schirm 8 aufgefangen werden und unterstützt so eine Aufnahme der in der beugenden Oberflächenstruktur 4 gespeicherten Information 12, die als Gesicht schematisch dargestellt ist.

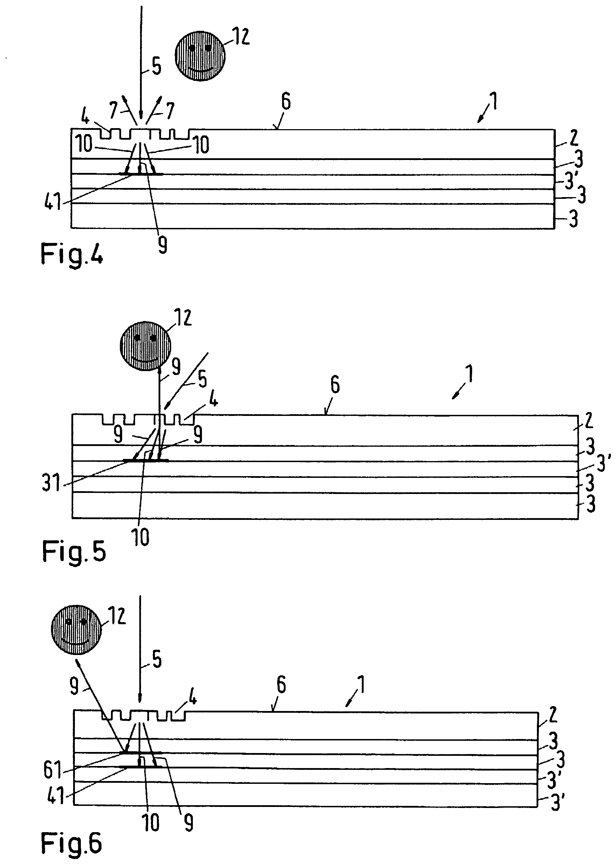

Bei einem alternativen Sicherheitsdokument, welches in Fig. 4 dargestellt ist, ist die Rauschunterdrückungsstruktur als Absorptionselement 41 ausgebildet. Bei diesem Sicherheitsdokument wird sämtliches transmittiertes Rekonstruktionslicht 9, 10 von dem Absorptionselement 41 absorbiert. Dieses ist vorzugsweise in einer Farbe ausgestaltet, die komplementär zu der Farbe des Rekonstruktionslichts 5 ist. Wird die beugende Oberflächenstruktur 4 beispielsweise mittels roten Laserlichts rekonstruiert, so ist das Absorptionselement vorzugsweise cyanfarben ausgebildet. Beispielsweise umfasst eine Druckschicht der mehreren weiteren Schichten 3 einen entsprechenden cyanfarbigen Bereich an jener Stelle, an der das transmittierte Rekonstruktionslicht 9, 10 auf diese Druckschicht auf. Selbst wenn die Absorption nicht vollständig erfolgt, wird jedoch zumindest die ungerichtete Streuung des transmittierten Rekonstruktionslichts 9, 10 deutlich reduziert. Ebenso sind Alternativen vorteilhaft, in denen die Absorptionsschicht schwarz ist und somit Licht aller Wellenlängen des sichtbaren Spektralbereichs absorbiert.

In Fig. 5 ist ein weiteres Sicherheitsdokument 1 dargestellt, bei dem die Rauschunterdrückungsstruktur ein Reflexionselement 31 umfasst, welches seinerseits eine optisch variable Farbe (optical variable ink) zum Reflektieren umfasst. Hierbei wird vorzugsweise eine optisch variable Farbe eingesetzt, die zumindest für die Wellenlänge des Rekonstruktionslichts 5 eine maximale Reflexionsintensität unter einem Abweichungswinkel gegenüber einer Reflexion gemäß der geometrischen Optik aufweist. Wie bei T. G. Coombs et al., SPIE Vol. 6075, 60750I-1 (2006) beschrieben ist, gibt es optisch variable Farben, bei denen der optimale Betrachtungswinkel um etwa 10° von einem Reflexionswinkel abweicht, der dem Beleuchtungswinkel der Farbe entspricht. Bei dem in Fig. 5 dargestellten Sicherheitsdokument ist die beugende Oberflächenstruktur 4 so ausgebildet, dass eine höhere Beugungsordnung (nicht die nullte Beugungsordnung), vorzugsweise eine +/- erste ($\pm 1$.)

Beugungsordnung des transmittierten Rekonstruktionslichts 10, unter genau diesem Abweichungswinkel auf das in optisch variabler Farbe ausgeführte Reflexionselement 31 auftrifft. Dieses wird dann senkrecht zur Oberseite 6 der Beugungsschicht aus dieser heraus reflektiert. Unter dem ausgewählten Beleuchtungswinkel, unter dem die eine Beugungsordnung genau unter diesem Abweichungswinkel auf die optisch variable Farbe auftrifft, ist somit abweichend von der nach der geometrischen Optik erwarteten Richtung eine maximale Intensität der Rekonstruktion der gespeicherten Information 12 senkrecht zur Oberseite 6 beobachtbar. Hierdurch erhält man ein kombiniertes Sicherheitsmerkmal. Ein gefälschtes Dokument, bei dem die beugende Oberflächenstruktur korrekt nachgebildet ist, findet eine Rekonstruktion unter dem ausgewählten Beleuchtungswinkel so statt, dass eine maximale Intensität nicht senkrecht zur Oberseite auftritt, sofern nicht auch die optisch variable Farbe mit dem korrekten ausgezeichneten Abweichungswinkel an der richtigen Stelle als Reflexionselement 31 einer Rauschunterdrückungsstruktur in dem Sicherheitselement 1 angeordnet ist.

In Fig. 6 ist ein weiteres Sicherheitsdokument 1 dargestellt, bei dem als Rauschunterdrückungsstruktur zusätzlich zu dem Absorptionselement zwischen der beugenden Oberflächenstruktur 4 und dem Absorptionselement 41 ein Volumenhologramm 61 ausgebildet bzw. eingebracht ist. Dieses ist vorzugsweise so ausgebildet, dass es beispielsweise eine positive oder negative erste (±1.) Beugungsordnung des Rekonstruktionslichts vorgegebener Wellenlänge bei einer Rekonstruktion unter einem ausgezeichneten Einfallswinkel zurück durch die Beugungsschicht 2 aus der Oberseite 6 der Beugungsschicht 2 heraus reflektiert. Vorzugsweise ist die Reflexion so ausgeführt, dass sich diese mit der direkten Reflexion an der Grenzfläche Luft-Beugungsschicht überlagert. Transmittiertes Rekonstruktionslicht 9, 10, welches nicht von dem Volumenhologramm 61 reflektiert und/oder gebeugt wird, wird in diesem Sicherheitsdokument ebenfalls von dem Absorptionselement 41 absorbiert. Für den Fall, dass das Rekonstruktionslicht 5 nicht unter dem optimalen Rekonstruktionswinkel auf die beugende Oberflächenstruktur 4 auftrifft, ist für keine Beugungsordnung die Rekonstruktionsbedingung des Volumenhologramms 61 erfüllt, so dass sämtliches transmittiertes Rekonstruktionslicht 9, 10 durch das Volumenhologramm hindurchtritt und von dem Absorptionselement 41 absorbiert wird.

Ein Volumenhologramm weist zusätzlich die Möglichkeit auf, eigene holografische Informationen zu speichern, die während der Reflexion ausgelesen werden können. So kann beispielsweise in das Volumenhologramm ein Muster eingespeichert sein, welches individualisierend, beispielsweise für eine Person, sein kann, der das Sicherheitsdokument 1 zugeordnet ist. Ebenso kann jedoch auch eine nicht individualisierende Information in dem Volumenhologramm gespeichert sein.

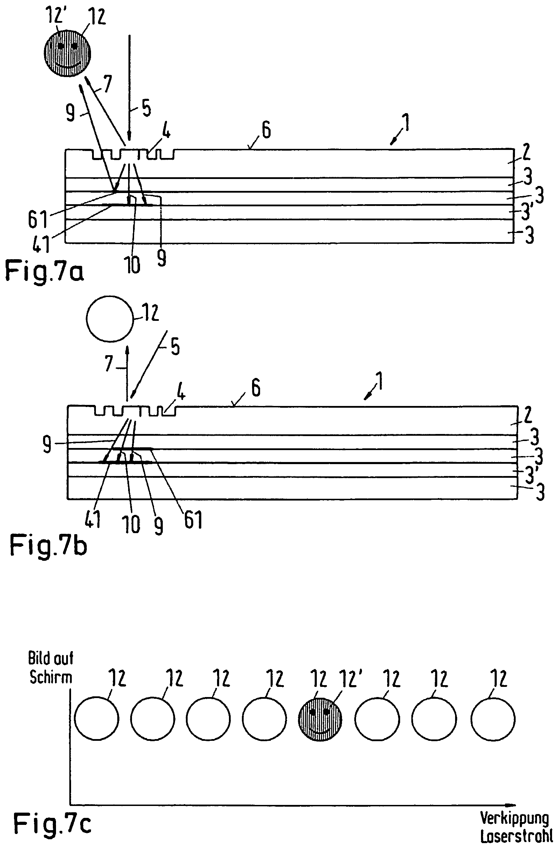

In Fig. 7a ist eine Ausführungsform eines Sicherheitsdokuments beschrieben, bei der das in dem Volumenhologramm 61 gespeicherte Muster ein Bestandteil eines Gesamtmusters ist. Ein weiterer Bestandteil des Gesamtmusters ist in der beugenden Oberflächenstruktur 4 gespeichert. D.h., die in der beugenden Oberflächenstruktur 4 gespeicherte Information umfasst das weitere Muster. Unter einer optimalen Rekonstruktionsgeometrie, die beispielsweise der nach Fig. 6 entspricht, wird die Information, welche in der beugenden Oberflächenstruktur 4 gespeichert ist, hier ein Kreis 71, in dem direkt in Reflexion gebeugten Rekonstruktionslicht 7 rekonstruiert. Das transmittierte Rekonstruktionslicht einer der Beugungsordnungen, hier der minus ersten (-1.) Beugungsordnung, rekonstruiert das Volumenhologramm und wird hierbei so reflektierend gebeugt, dass das Muster, welches in dem Volumenhologramm 61 gespeichert ist, hier eine Gesichtsinformation ohne den umrandenden Kreis 71, mit dem direkt reflektierend gebeugten Rekonstruktionslicht 7 auf einem Schirm überlagert wird. Das Gesamtmuster (das vollständige Gesicht einschließlich des umrandenden Kreises 71) kann hierbei nur bei einer Rekonstruktion unter der ausgewählten optimalen Rekonstruktionsgeometrie betrachtet werden. Andere Ausführungsformen sehen vor, dass die nullte Beugungsordnung des transmittierten Rekonstruktionslichts das Volumenhologramm rekonstruiert. Die übrigen Beugungsordnungen des transmittierten Rekonstruktionslichts werden von dem Absorptionselement 41 absorbiert.

In Fig. 7b ist eine Situation gezeigt, in der das Rekonstruktionslicht 5 nicht unter dem ausgezeichneten Rekonstruktionswinkel der ausgezeichneten Rekonstruktionsgeometrie auf die beugende Oberflächenstruktur 4 einfällt. In diesem Fall wird sämtliches transmittiertes Rekonstruktionslicht 9, 10 von dem Absorptionselement 41 der Rauschunterdrückungsstruktur absorbiert, da das transmittierte Rekonstruktionslicht 9, 10 für keine der Beugungsordnungen die Rekonstruktionsbedingungen des Volumenhologramms 61 erfüllt. Dieses ist so ausgebildet, dass eine maximale Beugungseffizienz bei der Wellenlänge erreicht wird, die zur Rekonstruktion der beugenden Oberflächenstruktur verwendet wird. Ferner liegt ein optimaler Rekonstruktionswinkel des Volumenhologramms, d.h. ein Winkel, unter dem das Volumenhologramm 61 sein Maximum der Beugungseffizienz erreicht, in jenem Winkelbereich, in dem transmittiertes Rekonstruktionslicht 9, 10 auf das Volumenhologramm auftrifft, das an der beugenden Oberflächenstruktur 4, wenn die beugende Oberflächenstruktur 4 unter einer gewünschten ausgewählten Bestrahlungsrichtung für die Rekonstruktion mit Rekonstruktionslicht 5 bestrahlt wird. Eine Beugungseffizienz des Volumenhologramms liegt bevorzugt oberhalb von 75%, bevorzugter jedoch nahe 100%.

In Fig. 7c sind unterschiedliche Ansichten, die man auf einem Schirm nachweist, dargestellt, wenn man das Sicherheitsdokument nach Fig. 7a und 7b unter unterschiedlichen Einfallswinkeln mit dem Rekonstruktionslicht bestrahlt. In Abhängigkeit von dem Einfallswinkel wandert die rekonstruierte Information 12 (hier ein Kreis), die in der beugenden Oberflächenstruktur 4 gespeichert ist. Nur unter der ausgezeichneten Rekonstruktionsgeometrie (einem ausgezeichneten Einfallswinkel bzw. Beleuchtungswinkel des Rekonstruktionslichts 5) ist für mindestens eine Beugungsordnung, hier die minus erste Beugungsordnung, wie in Fig. 7a dargestellt ist, auch eine Rekonstruktionsbedingung des Volumenhologramms 61 erfüllt. In diesem Fall überlagert sich auf dem Schirm die rekonstruierte Information 12' des Volumenhologramms 61, hier eine innere Gesichtsinformation mit dem umrandenden Kreis 71, zu einem Gesamtmuster. Wird der Einfallswinkel weiter verändert, so wandert die rekonstruierte Information 12, die in der beugenden Oberflächenstruktur 4 gespeichert ist, weiter. Man erhält somit bei dieser Ausführungsform ein komplexes Sicherheitsmerkmal, welches zwei holografische Strukturen umfasst und nur unter einer vorgegebenen optimalen Rekonstruktionsgeometrie vollständig abgebildet werden kann. Für eine Verifikation wird ein solches Sicherheitsdokument somit vorzugsweise unter unterschiedlichen Beleuchtungswinkeln mit Rekonstruktionslicht beleuchtet, von denen eine mit der optimalen Rekonstruktionsgeometrie zusammenfällt.

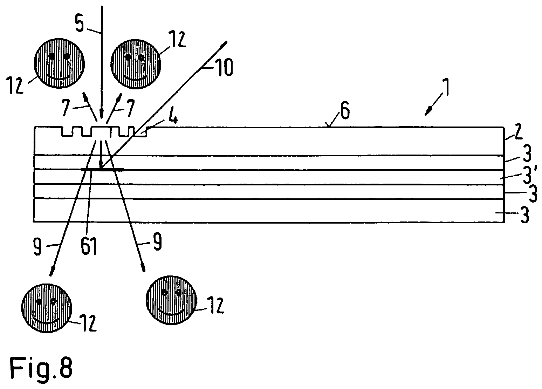

In Fig. 8 ist ein weiteres Sicherheitsdokument 1 gezeigt, bei dem als Rauschunterdrückungsstruktur ausschließlich ein Volumenhologramm 61 als Reflexionselement ausgebildet ist. Das Volumenhologramm 61 ist so ausgebildet, dass das transmittierte Licht 9 nullter Ordnung bei Einstrahlung des Rekonstruktionslichts 5 unter einem ausgewählten Rekonstruktionswinkel reflektiert wird. Weist das Sicherheitsdokument 1 zusätzlich einen Transmissionskanal 21 auf, so kann die in der beugenden Oberflächenstruktur gespeicherte Information auf einem Schirm hinter dem Sicherheitsdokument 1 abgebildet werden. Alternativ und/oder zusätzlich kann die Reflexion des transmittierten Rekonstruktionslichts nullter Ordnung so ausgestaltet sein, dass dieses Licht so reflektiert wird, dass es eine Abbildung der Information auf dem Schirm 8 durch das direkt reflektierend gebeugte Rekonstruktionslicht 7 nicht beeinträchtigt.

Die beschriebenen Ausführungsformen sind lediglich beispielhafte Ausführungsformen für Sicherheitsdokumente, die eine Rauschunterdrückungsstruktur aufweisen. Die einzelnen Elemente, Reflexionselemente, Absorptionselemente und Volumenhologramme, können im Rahmen des Gegenstandes der Ansprüche gemeinsam, paarweise usw. miteinander kombiniert werden, um ein Sicherheitsdokument zu schaffen, mit dem eine verbesserte Rekonstruktion der in der beugenden Oberflächenstruktur gespeicherten Information möglich ist.

Die im Zusammenhang mit Fig. 1 beschriebene Herstellung eines Sicherheitsdokuments bzw. eines Dokumentkörpers ist ebenfalls auf die übrigen beschriebenen Ausführungsformen anwendbar. Anstelle eines Laminationsvorgangs können die mehreren Schichten auch auf andere Weise zu dem Dokumentkörper verbunden werden, beispielsweise miteinander verklebt oder bedruckt werden.

Um die beugende Oberflächenstruktur 4, das heißt, das Oberflächenrelief, zu schützen, kann dieses mit einer Lackschicht überzogen werden, die jedoch einen deutlich abweichenden Brechungsindex im Vergleich zur Beugungsschicht aufweisen muss.

Bezugszeichenliste

| 1 | Sicherheitsdokument |
|---|---|
| 2 | Beugungsschicht |
| 3 | weitere Schichten |
| 4 | beugende Oberflächenstruktur |
| 5 | Rekonstruktionslicht (einfallend) |
| 6 | Oberseite |
| 7 | reflektierend gebeugtes Rekonstruktionslicht (direkt) |
| 8 | Schirm |
| 9 | transmittiertes Rekonstruktionslicht (nullte Beugungsordnung) |
| 10 | transmittiertes Rekonstruktionslicht (+/- erste Beugungsordnung) |
| 11 | weiterer Schirm |
| 12 | Information |
| 13 | diffus gestreutes Rekonstruktionslicht |
| 21 | transparenter Kanal |
| 22 | Ausdehnung (a) |
| 23 | Abstand (d) |
| 24 | Flächennormale |
| 25 | abgewandte Seite |
| 31 | Reflexionselement |
| 41 | Absorptionselement |
| 61 | Volumenhologramm |

**Patentansprüche**

1. Sicherheitsdokument (1) mit mindestens einem Sicherheitselement, umfassend einen Dokumentkörper, der mindestens eine Beugungsschicht (2) umfasst, die an einer Oberseite eine beugende Oberflächenstruktur (4), die als optisch dünnes Projektionshologramm ausgebildet ist, als das mindestens eine Sicherheitselement umfasst,
wobei in dem Dokumentkörper von der Oberseite (6) der mindestens einen Beugungsschicht (2) aus betrachtet hinter der beugenden Oberflächenstruktur (4) mindestens eine Rauschunterdrückungsstruktur ausgebildet oder angeordnet ist, welche eine ungerichtete Reflexion eines zum Auslesen der beugenden Oberflächenstruktur (4) auf die Oberseite (6) der Beugungsschicht (2) auftreffenden und durch die beugende Oberflächenstruktur (4) transmittierten Rekonstruktionslichts (9, 10) zurück durch die Oberseite (6) der Beugungsschicht (2) minimiert, und
wobei die Rauschunterdrückungsstruktur ein optisches Volumenhologramm (61) umfasst, das mindestens eine Beugungsordnung des transmittierten Rekonstruktionslichts (9, 10) beugt oder reflektierend beugt,
**dadurch gekennzeichnet, dass**
in das Volumenhologramm (61) mindestens ein Muster als holografische Information gespeichert ist, und das in dem Volumenhologramm (61) gespeicherte Muster ein Musterbestandteil eines Gesamtmusters ist, und eine Reflexion an der Oberseite (6) der beugenden Oberflächenstruktur (4) einen weiteren Musterbestandteil des Gesamtmusters rekonstruiert, und ein ausgezeichneter Inzidenzwinkel für das auf die beugende Oberflächenstruktur (4) auftreffende Rekonstruktionslicht (5) existiert, so dass mindestens eine Beugungsordnung des unter diesem ausgezeichneten Inzidenzwinkel auf die beugende Oberflächenstruktur (4) auftreffenden und durch die beugende Oberflächenstruktur (4) transmittierten Rekonstruktionslichts (9, 10) das Volumenhologramm (61) so rekonstruiert, dass der mindestens eine Musterbestandteil rekonstruiert wird, und sich mit dem weiteren Musterbestandteil zu dem Gesamtmuster ergänzt.

2. Sicherheitsdokument (1) nach Anspruch 1, **dadurch gekennzeichnet, dass** der Dokumentkörper aus mehreren Schichten, die die Beugungsschicht (2) und mindestens eine weitere Schicht (3) umfassen, hergestellt ist und die Rauschunterdrückungsstruktur einen transparenten Kanal umfasst, der einen Austritt zumindest eines Teils des durch die beugende Oberflächenstruktur (4) transmittierten Rekonstruktionslichts (9, 10) aus einer von der Oberseite (6) der mindestens einen Beugungsschicht abgewandten Seite des Dokumentenkörpers ermöglicht, wobei der transparente Kanal (21) sich durch mindestens eine der mehreren Schichten erstreckt, die zumindest teilweise opak ist.

3. Sicherheitsdokument (1) nach Anspruch 1, **dadurch gekennzeichnet, dass** die Rauschunterdrückungsstruktur ein Reflexionselement (31) umfasst, welches eine gerichtete Reflexion zumindest eines Teils des durch die beugende Oberflächenstruktur (4) transmittierten Rekonstruktionslichts (9, 10) unterstützt, wobei das Reflexionselement (31) so angeordnet und ausgestaltet ist, dass das durch die beugende Oberflächenstruktur (4) transmittierte Rekonstruktionslicht an dem Reflexionselement (31) in der Weise reflektiert wird, dass es sich mit dem an der Oberseite (6) der beugenden Oberflächenstruktur (4) reflektierend gebeugten Rekonstruktionslicht (7) überlagert.

4. Sicherheitsdokument (1) nach Anspruch 1, **dadurch gekennzeichnet, dass** die Rauschunterdrückungsstruktur ein Reflexionselement (31) umfasst, welches eine gerichtete Reflexion zumindest eines Teils des durch die beugende Oberflächenstruktur (4) transmittierten Rekonstruktionslichts (9, 10) unterstützt, wobei das Reflexionselement (31) einen mit einer optisch variablen Farbe bedeckten Abschnitt umfasst, wobei eine Reflexion für zumindest eine spektrale Farbe ein Intensitätsmaximum bei einem Beobachtungswinkel aufweist, der um einen Abweichungswinkel von einem Reflexionswinkel gemäß der geometrischen Optik abweicht.

5. Sicherheitsdokument (1) nach Anspruch 4, **dadurch gekennzeichnet, dass** die beugende Oberflächenstruktur (4) so ausgebildet ist, dass ein weiterer ausgezeichneter Inzidenzwinkel für das Rekonstruktionslicht (5) zum Auslesen existiert, so dass das unter diesem weiteren ausgezeichneten Winkel auf die beugende Oberflächenstruktur (4) auftreffende Rekonstruktionslicht (5) zum Auslesen unter dem Abweichungswinkel auf die optisch variable Farbe trifft und senkrecht durch die Oberseite (6) der Beugungsschicht (2) zurückreflektiert wird.

6. Sicherheitsdokument (1) nach einem der vorangehenden Ansprüche, **dadurch gekennzeichnet, dass** das Volumenhologramm (61) ausgebildet ist, mindestens eine Beugungsordnung des durch die beugende Oberflächenstruktur (4) transmittierten Rekonstruktionslichts (9, 10) durch die Oberseite (6) der Beugungsschicht (2) zurückreflektierend zu beugen.

7. Verfahren zum Herstellen eines Sicherheitsdokuments mit mindestens einem Sicherheitselement, umfassend die Schritte:

 Erstellen eines Dokumentkörpers, der mindestens eine Beugungsschicht umfasst;
 Erzeugen einer beugenden Oberflächenstruktur (4) in einer Oberseite (6) der Beugungsschicht (2) als das Sicherheitselement, die als optisch dünnes Projektionshologramm ausgebildet wird,
 wobei in dem Dokumentkörper von der Oberseite (6) der mindestens einen Beugungsschicht (2) aus betrachtet hinter der beugenden Oberflächenstruktur (4) mindestens eine Rauschunterdrückungsstruktur ausgebildet oder angeordnet wird, die eine ungerichtete Reflexion eines zum Auslesen der beugenden Oberflächenstruktur (4) auf die Oberseite (6) der Beugungsschicht (2) auftreffenden und durch die beugende Oberflächenstruktur (4) transmittierten Rekonstruktionslichts (9, 10) zurück durch die Oberseite (6) der Beugungsschicht (2) reduziert oder minimiert, und
 wobei die Rauschunterdrückungsstruktur ein optisches Volumenhologramm (61) umfasst, das mindestens eine Beugungsordnung des transmittierten Rekonstruktionslichts (9, 10) beugt oder reflektierend beugt,
 **dadurch gekennzeichnet, dass**
 in das Volumenhologramm (61) mindestens ein Muster als holografische Information gespeichert ist, und das in dem Volumenhologramm

(61) gespeicherte Muster ein Musterbestandteil eines Gesamtmusters ist, und eine Reflexion an der Oberfläche (6) der beugenden Oberflächenstruktur (4) einen weiteren Musterbestandteil des Gesamtmusters rekonstruiert, und ein ausgezeichneter Inzidenzwinkel für das auf die beugende Oberflächenstruktur (4) auftreffende Rekonstruktionslicht (5) existiert, so dass mindestens eine Beugungsordnung des unter diesem ausgezeichneten Inzidenzwinkel auf die beugende Oberflächenstruktur (4) auftreffenden und durch die beugende Oberflächenstruktur (4) transmittierten Rekonstruktionslichts (9, 10) das Volumenhologramm (61) so rekonstruiert, dass der mindestens eine Musterbestandteil rekonstruiert wird, und sich mit dem weiteren Musterbestandteil zu dem Gesamtmuster ergänzt.

8. Verfahren nach Anspruch 7, **dadurch gekennzeichnet, dass** das Volumenhologramm (61) so ausgebildet und in eine der Schichten belichtet oder auf eine der Schichten aufgebracht wird, dass transmittiertes Rekonstruktionslicht (9) der nullten Beugungsordnung der beugenden Oberflächenstruktur (4) durch das Volumenhologramm (61) reflektierend gebeugt wird.

9. Verfahren nach einem der Ansprüche 7 oder 8, **dadurch gekennzeichnet, dass** das Volumenhologramm (61) ausgebildet wird, mindestens eine, vorzugsweise von der die nullten Ordnung verschiedene, Beugungsordnung des durch die beugende Oberflächenstruktur (4) transmittierten Rekonstruktionslichts (9, 10) durch die Oberseite (6) der Beugungsschicht (2) zurückreflektierend zu beugen.

10. Verfahren nach einem der Ansprüche 7 bis 9, **dadurch gekennzeichnet, dass** die mehreren Schichten (3) zu dem Dokumentkörper laminiert werden.

## Claims

1. Security document (1) with at least one security element, comprising a document body which comprises at least one diffraction layer (2) that comprises on a top side a diffraction surface structure (4) which is embodied as an optically thin projection hologram as the at least one security element, wherein, in the document body, viewed from the upper side (6) of the at least one diffraction layer (2), behind the diffraction surface structure (4) at least one noise suppression structure is formed or arranged, which minimises an unoriented reflection of a reconstruction light (9, 10) for reading out the diffraction surface structure (4), impinging onto the top side (6) of the diffraction layer (2), and transmitted through the diffraction surface structure (4), back through the top side (6) of the diffraction layer (2), and wherein the noise suppression structure comprises an optical volume hologram (61), which diffracts or reflectively diffracts at least one diffraction order of the transmitted reconstruction layer (9, 10), **characterised in that** at least one pattern is stored into the volume hologram (61) as holographic information, and the pattern stored in the volume hologram (61) is a pattern constituent part of a total pattern, and a reflection on the upper side (6) of the diffractive surface structure (4) reconstructs a further pattern constituent part of the total pattern, and a marked incidence angle exists for the reconstruction light (5) impinging onto the diffractive surface structure (4), such that at least one order of diffraction of the reconstruction light (9, 10), impinging onto the diffracting surface structure (4) at this marked incidence angle, and transmitted through the diffraction surface structure, reconstructs the volume hologram (61) in such a way that the at least one pattern constituent part is reconstructed, and is supplemented with the further pattern constituent part to form the total pattern.

2. Security document (1) according to claim 1, **characterised in that** the document body is produced from a plurality of layers, which comprise the diffraction layer (2) and at least one further layer (3), and the noise suppression structure comprises a transparent channel, which allows for an emergence of at least a part of the reconstruction light (9, 10), transmitted through the diffraction surface structure (4), out of a side of the document body facing away from the upper side (6) of the at least one diffraction layer, wherein the transparent channel (21) extends through at least one of the plurality of layers, which is at least partially opaque.

3. Security document (1) according to claim 1, **characterised in that** the noise suppression structure comprises a reflection element (31), which supports an oriented reflection of at least a part of the reconstruction light (9, 10) transmitted through the diffraction surface structure (4), wherein the reflection element (31) is arranged and configured in such a way that the reconstruction light transmitted through the diffraction surface structure (4) is reflected at the reflection element (31) in such a way that it overlays the reconstruction light (7) reflectively diffracted at the upper side (6) of the diffraction surface structure (4).

4. Security document (1) according to claim 1, **characterised in that** the noise suppression structure comprises a reflection element (31), which supports an oriented reflection of at least a part of the reconstruction light (9, 10) transmitted through the diffraction surface structure (4), wherein the reflection element (31) comprises a section covered with an optically variable colour, wherein a reflection exhibits an intensity maximum for at least one spectral colour at an observation angle which deviates from a reflection angle according to the geometric object.

5. Security document (1) according to claim 4, **characterised in that** the diffraction surface structure (4) is configured in such a way that a marked incidence angle for the reconstruction layer (5) exists for reading out, such that the reconstruction light (5), impinging at this further marked angle onto the diffraction surface structure (4), impinges onto the optically variable colour for reading out at the deviation angle, and is reflected back perpendicular through the upper side (6) of the diffraction layer (2).

6. Security document (1) according to any one of the preceding claims, **characterised in that** the volume hologram (61) is configured for diffracting and reflecting back through the upper side (6) of the diffraction layer (2) at least one order of diffraction of the reconstruction light (9,10) transmitted through the diffraction surface structure (4).

7. Method for producing a security document with at least one security element, comprising the steps:

providing a document body, which comprises at least one diffraction layer; producing a diffraction surface structure (4) in an upper side (6) of the diffraction layer (2) as the security element, which is configured as an optically thin projection hologram, wherein, viewed from the top side (6) of the at least one diffraction layer (2), in the document body, behind the diffraction surface structure (4), at least one noise suppression structure is configured or arranged, which reduces or minimises an unoriented reflection of a reconstruction light (9, 10), impinging onto the top side (6) of the diffraction layer (2), and transmitted by the diffraction surface structure (4), back through the top side (6) of the diffraction layer (2), for reading out the diffraction surface structure (4), wherein the noise suppression structure comprises an optical volume hologram (61), which diffracts or reflectively diffracts at least one diffraction arrangement of the transmitted reconstruction layer (9, 10), **characterised in that** at least one pattern is stored into the volume hologram (61) as holographic information, and the pattern stored in the volume hologram (61) is a pattern constituent part of a total pattern, and a reflection on the upper side (6) of the diffractive surface structure (4) reconstructs a further pattern constituent part of the total pattern, and a marked incidence angle exists for the reconstruction light (5) impinging onto the diffractive surface structure (4), such that at least one order of diffraction of the reconstruction light (9, 10), impinging onto the diffracting surface structure (4) at this marked incidence angle, and transmitted through the diffraction surface structure (4), reconstructs the volume hologram (61) in such a way that the at least one pattern constituent part is reconstructed, and is supplemented with the further pattern constituent part to form the total pattern.

8. Method according to claim 7, **characterised in that** the volume hologram (61) is configured in such a way, and exposed into one of the layers or applied onto one of the layers, that transmitted reconstruction light (9) of the nulled order of diffraction of the diffraction surface structure (4) is reflectively diffracted by the volume hologram (61).

9. Method according to claim 7 or 8, **characterised in that** the volume hologram (61) is configured such as to diffract at least one order of diffraction, and preferably a plurality, differing from the null order, of the reconstruction light (9, 10) transmitted through the diffraction surface structure (4), reflecting back through the upper side (6) of the diffraction layer (2).

10. Method according to any one of claims 7 to 9, **characterised in that** the plurality of layers (3) are laminated to the document body.

**Revendications**

1. Document de sécurité (1) avec au moins un élément de sécurité, comprenant un corps de document, qui comprend au moins une couche de diffraction (2), qui comprend en tant que l'au moins un élément de sécurité, au niveau d'un côté supérieur, une structure superficielle (4) diffractante, qui est réalisée sous la forme d'un hologramme de projection optiquement fin, dans lequel au moins une structure de suppression du bruit est réalisée ou disposée dans le corps de document derrière la structure superficielle (4) diffractante vue depuis le côté supérieur (6) de l'au moins une couche de diffraction (2), laquelle réduit au minimum le renvoi d'une réflexion non dirigée d'une lumière de reconstruction (9, 10) incidente sur le côté supérieur (6) de la couche de diffraction (2) et transmise par la structure superficielle (4) diffractante aux fins de la lecture de la structure superficielle (4) diffractante à travers le côté supérieur (6) de la couche de diffraction (2), et dans lequel la structure de suppression du bruit comprend un hologramme de volume (61) optique, qui diffracte ou diffracte par réflexion au moins un ordre de diffraction de la lumière de reconstruction (9, 10) transmise, **caractérisé en ce que**

au moins un motif est mémorisé en tant qu'information holographique dans l'hologramme de volume (61), et

le motif mémorisé dans l'hologramme de volume (61) est un élément constitutif d'un motif global et une réflexion au niveau du côté supérieur (6) de la structure superficielle (4) aux fins de la lecture de la structure superficielle (4) diffractante reconstruit un autre élément constitutif du motif global,

et un angle d'incidence remarquable existe pour la lumière de reconstruction (5) incidente sur la structure superficielle (4) diffractante de sorte qu'au moins un ordre de diffraction de la lumière de reconstruction (9, 10) incidente selon ledit angle d'incidence remarquable sur la structure superficielle (4) diffractante et transmise par la structure superficielle (4) diffractante reconstruit l'hologramme de volume (61) de telle sorte que l'au moins un élément constitutif de motif est reconstruit et est complété de l'autre élément constitutif de motif pour former le motif global.

2. Document de sécurité (1) selon la revendication 1, **caractérisé en ce que** le corps de document est fabriqué à partir de plusieurs couches, qui comprennent la couche de diffraction (2) et au moins une autre couche (3), et la structure de suppression du bruit comprend un canal transparent, qui permet une sortie d'au moins une partie de la lumière de reconstruction (9, 10) transmise par la structure superficielle (4) diffractante à partir d'un côté, opposé au côté supérieur (6) de l'au moins une couche de diffraction, du corps de document, dans lequel le canal (21) transparent s'étend à travers au moins une des nombreuses couches, qui est au moins en partie opaque.

3. Document de sécurité (1) selon la revendication 1, **caractérisé en ce que** la structure de suppression du bruit comprend un élément de réflexion (31), qui soutient une réflexion dirigée d'au moins une partie de la lumière de reconstruction (9, 10) transmise par la structure superficielle (4) diffractante, dans lequel l'élément de réflexion (31) est disposé et configuré de telle sorte que la lumière de reconstruction transmise par la structure superficielle (4) diffractante est réfléchie au niveau de l'élément de réflexion (31) de telle manière qu'elle se superpose à la lumière de reconstruction (7) diffractée par réflexion au niveau du côté supérieur (6) de la structure superficielle (4) diffractante.

4. Document de sécurité (1) selon la revendication 1, **caractérisé en ce que** la structure de suppression du bruit comprend un élément de réflexion (31), qui soutient une réflexion dirigée d'au moins une partie de la lumière de reconstruction (9, 10) transmise par la structure superficielle (4) diffractante, dans lequel l'élément de réflexion (31) comprend une section couverte d'une couleur optiquement variable, dans lequel une réflexion pour au moins une couleur spectrale présente un maximum d'intensité pour un angle d'observation, qui diverge selon un angle d'écart d'un angle de réflexion selon l'optique géométrique.

5. Document de sécurité (1) selon la revendication 4, **caractérisé en ce que** la structure superficielle (4) diffractante est réalisée de telle sorte qu'un autre angle d'incidence remarquable existe pour la lumière de reconstruction (5) aux fins de la lecture si bien que la lumière de reconstruction (5) incidente selon ledit autre angle remarquable sur la structure superficielle (4) diffractante est incidente, aux fins de la lecture, selon l'angle d'écart, sur la couleur optiquement variable et est renvoyée par réflexion de manière perpendiculaire par le côté supérieur (6) de la couche de diffraction (2).

6. Document de sécurité (1) selon l'une quelconque des revendications précédentes, **caractérisé en ce que** l'hologramme de volume (61) est réalisé pour diffracter avec renvoi par réflexion au moins un ordre de diffraction de la lumière de reconstruction (9, 10) transmise par la structure superficielle (4) diffractante par le côté supérieur (6) de la couche de diffraction (2).

7. Procédé servant à fabriquer un document de sécurité avec au moins un élément de sécurité, comprenant les étapes de :

création d'un corps de document, qui comprend au moins une couche de diffraction ;
production d'une structure superficielle (4) diffractante dans un côté supérieur (6) de la couche de diffraction (2) en tant que l'élément de sécurité, qui est réalisée en tant qu'un hologramme de projection optiquement mince,
dans lequel au moins une structure de suppression du bruit est réalisée ou disposée dans le corps de document derrière la structure superficielle (4) diffractante vue depuis le côté supérieur (6) de l'au moins une couche de diffraction (2), qui réduit ou réduit au minimum le renvoi d'une réflexion non dirigée d'une lumière de reconstruction (9, 10) incidente sur le côté supérieur (6) de la couche de diffraction (2) et transmise par la structure superficielle (4) diffractante aux fins de la lecture de la structure superficielle (4) diffractante à travers le côté supérieur (6) de la couche de diffraction (2), et
dans lequel la structure de suppression du bruit comprend un hologramme de volume (61) optique, qui diffracte ou diffracte par réflexion au moins un ordre de diffraction de la lumière de reconstruction (9, 10) transmise,

**caractérisé en ce que**

au moins un motif est mémorisé en tant qu'information holographique dans l'hologramme de volume (61), et

le motif mémorisé dans l'hologramme de volume (61) est un élément constitutif d'un motif global et une réflexion au niveau de la surface (6) de la structure superficielle (4) diffractante reconstruit un autre élément constitutif du motif global,

et un angle d'incidence remarquable pour la lumière de reconstruction (5) incidente sur la structure superficielle (4) diffractante existe si bien qu'au moins un ordre de diffraction de la lumière de reconstruction (9, 10) incidente selon ledit angle d'incidence remarquable sur la structure superficielle (4) diffractante et transmise par la structure superficielle (4) diffractante reconstruit l'hologramme de volume (61) de telle sorte que l'au moins un élément constitutif de motif est reconstruit et est complété de l'autre élément constitutif de motif pour former le motif global.

8. Procédé selon la revendication 7, **caractérisé en ce que** l'hologramme de volume (61) est réalisé et éclairé dans une des couches ou appliqué sur l'une des couches de telle sorte qu'une lumière de reconstruction (9) transmise de l'ordre de diffraction de zéro de la structure superficielle (4) diffractante est diffractée par réflexion par l'hologramme de volume (61).

9. Procédé selon l'une quelconque des revendications 7 ou 8, **caractérisé en ce que** l'hologramme de volume (61) est réalisé pour diffracter par renvoi par réflexion au moins un ordre de diffraction, de préférence différent de l'ordre de zéro, de la lumière de reconstruction (9, 10) transmise par la structure superficielle (4) diffractante, par le côté supérieur (6) de la couche de diffraction (2).

10. Procédé selon l'une quelconque des revendications 7 à 9, **caractérisé en ce que** les nombreuses couches (3) sont laminées pour former le corps de document.

Fig.1

Fig.2

Fig.3

EP 2 208 115 B1

Fig.4

Fig.5

Fig.6

19

Fig.7a

Fig.7b

Bild auf
Schirm

Fig.7c

Verkippung
Laserstrahl

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006108607 A2
- WO 0153113 A
- JP 10143057 B
- US 20070013983 A1
- WO 2008131852 A1
- JP 2001315472 A
- DE 102004053367 A1

**In der Beschreibung aufgeführte Nicht-Patentliteratur**

- **T. G. COOMBS et al.** *SPIE,* 2006, vol. 6075, 60750I-1